# FASCICULE DE BREVET EUROPEEN

(11) **EP 2 264 502 B1**
(45) Date de publication et mention de la délivrance du brevet: **13.03.2013**
(21) Numéro de dépôt: 09305576.2
(22) Date de dépôt: 19.06.2009
(51) Int. Cl.: G02B 6/44

(54) **Procédé de raccordement de fibres optiques**
Verbindungsverfahren von optischen Fasern
Method of connecting optical fibres

(43) Date de publication de la demande: 22.12.2010
(73) Titulaire: Nexans, 75008 Paris (FR)
(72) Inventeur: Urfer, Patrick, 2016 Cortaillod (CH)
(74) Mandataire: Feray, Valérie

(56) Documents cités:
- EP-A1- 0 716 032
- FR-A1- 2 814 246
- JP-A- 2003 029 053
- US-A1- 2009 060 441
- US-A1- 2009 074 370

## Description

La présente invention a pour objet un procédé de raccordement de fibres optiques. Elle utilise en particulier un dispositif permettant de raccorder des fibres optiques d'un utilisateur à un câble d'acheminement de fibres optiques.

On connaît différents modes d'acheminement de fibres optiques chez un utilisateur résidant dans un immeuble. Les fibres sont en général acheminées depuis un boîtier d'introduction situé en bas de l'immeuble jusqu'à un boîtier de raccordement situé chez l'utilisateur.

Dans les techniques connues, les jonctions entre fibres dans le boîtier d'introduction et dans le boîtier de raccordement sont réalisées par épissures. Ce type de jonction a pour inconvénient de présenter un coût très élevé et nécessite une durée d'intervention particulièrement longue. En outre, l'installation doit être effectuée par un spécialiste, ce qui représente un investissement important.

Des boîtiers de raccordement mécaniques stockant des surlongueurs de fibres optiques sont également connus de JP2003029053, FR2814246, US2009/0074370 et US2009/0060441.

L'invention vise à remédier à ces inconvénients.

L'invention a ainsi pour objet un procédé de raccordement de fibres optiques comme défini dans la revendication 1 utilisant un boîtier de raccordement apte à raccorder mécaniquement des fibres optiques d'un utilisateur à des fibres optiques disposées dans le boîtier et issues d'un câble d'acheminement de fibres optiques connecté au boîtier.

Le dispositif utilisé dans l'invention comprend en outre un moyen d'enroulement sur lequel est enroulé le câble, ainsi qu'une enveloppe à l'intérieur de laquelle sont disposés le boîtier et le moyen d'enroulement, l'enveloppe étant munie d'une ouverture permettant un déroulement du câble hors de l'enveloppe.

Ainsi, le raccordement mécanique des fibres permet d'éviter la formation complexe et onéreuse d'épissures. Le moyen d'enroulement disposé à l'intérieur de l'enveloppe permet quant à lui de dérouler rapidement et facilement le câble de raccordement.

Le dispositif peut comprendre en outre un système de pose destiné à accueillir l'enveloppe. Le système de pose est destiné à faciliter le déroulement du câble.

Le câble est de préférence enroulé sur une surface extérieure du moyen d'enroulement, le moyen d'enroulement étant creux, et le boîtier est de préférence disposé à l'intérieur du moyen d'enroulement. Dans ce cas, le moyen d'enroulement peut comprendre une ouverture pour le passage du câble depuis l'intérieur du moyen d'enroulement vers la surface extérieure du moyen d'enroulement. La disposition du boîtier à l'intérieur du moyen d'enroulement permet un gain de place.

Le dispositif comprend avantageusement des moyens de fixation du câble sur l'intérieur du moyen d'enroulement.

Le dispositif comprend de préférence des moyens de fixation du moyen d'enroulement sur l'enveloppe. Ces moyens de fixation comprennent par exemple au moins une étiquette autocollante.

L'enveloppe comprend de préférence des moyens de fixation du câble sur l'enveloppe. Dans ce cas, l'enveloppe peut comprendre une première couche sur laquelle est fixée le câble et une deuxième couche munie d'une zone frangible recouvrant la partie de câble fixée sur la première couche.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est une vue générale d'un dispositif de raccordement de fibres optiques utilisé dans l'invention,
- la figure 2 est une vue de détail d'une partie du dispositif,
- les figures 3a à 3g illustrent différentes étapes de préparation et de mise en oeuvre du dispositif, et
- la figure 4 représente schématiquement un immeuble équipé grâce au dispositif.

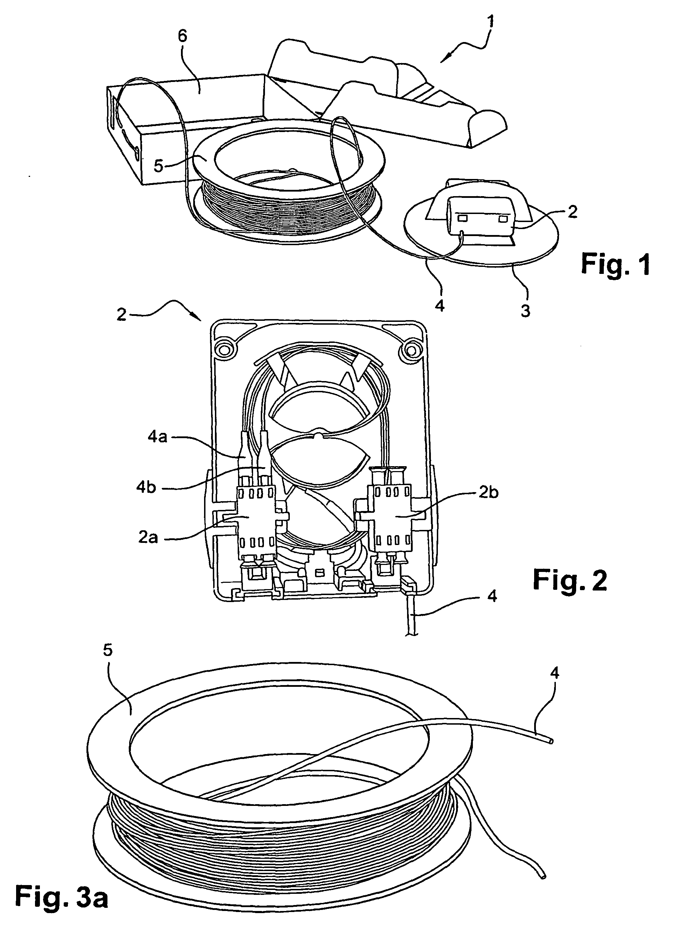

Le dispositif 1 de raccordement de fibres optiques, tel qu'illustré à la figure 1, comprend un boîtier de raccordement 2 préconfectionné, disposé sur un support 3 et connecté à un câble 4 d'acheminement de fibres. Le dispositif 1 comprend également un moyen d'enroulement 5 sous la forme d'une bobine sur laquelle est enroulé le câble 4, et une boîte 6 destinée à recevoir le boîtier de raccordement 2, le câble 4 et la bobine 5.

La figure 2 montre l'intérieur du boîtier de raccordement 2. Le boîtier 2 comprend deux raccords 2a,2b destinés à accueillir chacun deux connecteurs. Le câble 4 d'acheminement de fibres est ainsi relié au boîtier 2 via deux connecteurs 4a,4b insérés dans la partie supérieure du raccord 2a situé à gauche du boîtier 2. Les fibres optiques de l'utilisateur peuvent ensuite être raccordées aux fibres optiques du câble d'acheminement via des connecteurs insérés dans la partie inférieure des raccords 2a,2b.

La bobine 5, tel qu'illustrée à la figure 3a, est destinée à recevoir le câble 4 d'acheminement de fibres qui est enroulé sur la surface extérieure de la bobine 5. La bobine 5, tout comme la boîte 6 et le support 3 du boîtier de raccordement 2, est avantageusement en un matériau recyclable, comme par exemple du carton.

Une partie du câble 4 est disposée à l'intérieur de la bobine 5, grâce à une ouverture non représentée pratiquée dans la bobine 5, qui permet le passage du câble 4 depuis la surface extérieure de la bobine 5 vers l'intérieur de la bobine 5. Le câble 4 est avantageusement fixé à l'intérieur de la bobine 5 à l'aide d'une étiquette autocollante, non représentée. L'étiquette autocollante peut par exemple être placée au niveau de l'ouverture pratiquée dans la bobine 5.

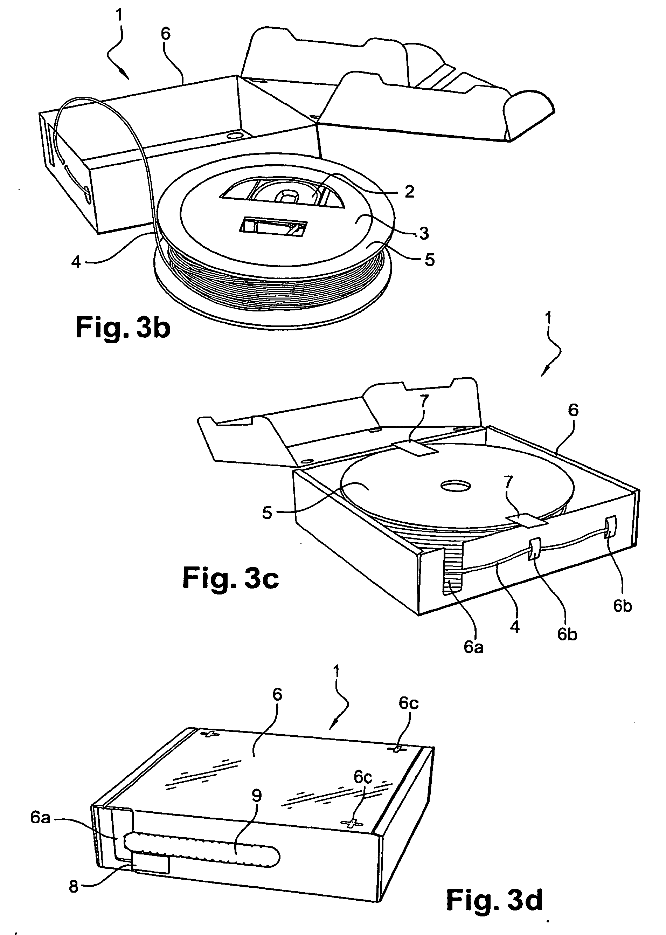

On dispose ensuite le boîtier de raccordement 2 à l'intérieur de la bobine 5 à l'aide du support 3 du boîtier 2, tel qu'illustré à la figure 3b. Le support 3 est un disque en carton qui épouse le contour interne de la bobine 5.

L'extrémité extérieure du câble 4 est enfilée à l'extérieur de la boîte 6, via une ouverture 6a de la boîte 6, dans deux logements 6b, de manière à fixer l'extrémité du câble 4 sur la boîte 6. La bobine 5 est ensuite rangée dans la boîte 6. Des étiquettes autocollantes 7 sont posées sur la bobine 5 et la boîte 6 pour éviter la rotation de la bobine 5 dans la boîte 6 pendant le transport de la boîte 6 (figure 3c).

La figure 3d montre la boîte 6 une fois refermée. Une étiquette autocollante 8 aide à fermer la boîte 6. On peut faire figurer sur l'étiquette 8 des informations relatives au dispositif 1. Des perforations 6c sont réalisées dans la boîte 6 pour faciliter l'accueil ultérieur de la boîte 6 dans un système de pose. Une languette frangible 9 est formée dans le couvercle de la boîte 6, de manière à recouvrir la partie du câble 4 qui est insérée dans les logements 6b.

La suite de la description est consacrée à un mode de mise en oeuvre du dispositif 1.

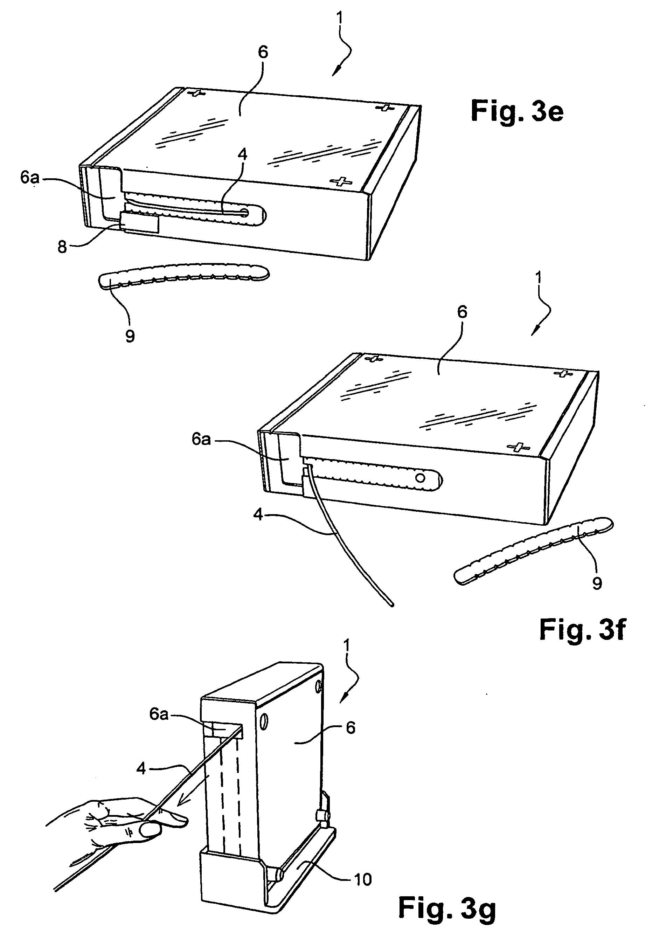

La languette 9 est enlevée de la boîte 6, ce qui laisse apparaître la portion de câble 4 insérée dans le logement 6b. Puis l'extrémité du câble 4 est dégagée de la boîte 6 (figures 3e et 3f).

Tel qu'illustré à la figure 3g, on positionne ensuite la boîte 6 sur un système de pose 10, typiquement une console. La console 10 est un élément lourd qui permet de bloquer la boîte 6. On tire ensuite le câble 4 d'un coup sec hors de l'ouverture 6a, dans la direction indiquée par la flèche, de manière à débloquer la bobine 5.

Lorsque le câble 4 se bloque, cela signifie qu'il est entièrement déroulé. On ouvre alors la boîte 6, puis on sort le boîtier de raccordement 2 de la bobine 5 et on déchire la bobine 5 afin de dégager le câble 4. Le câble 4 peut alors être raccordé en bas de l'immeuble et le boîtier 2 peut être fixé chez l'utilisateur.

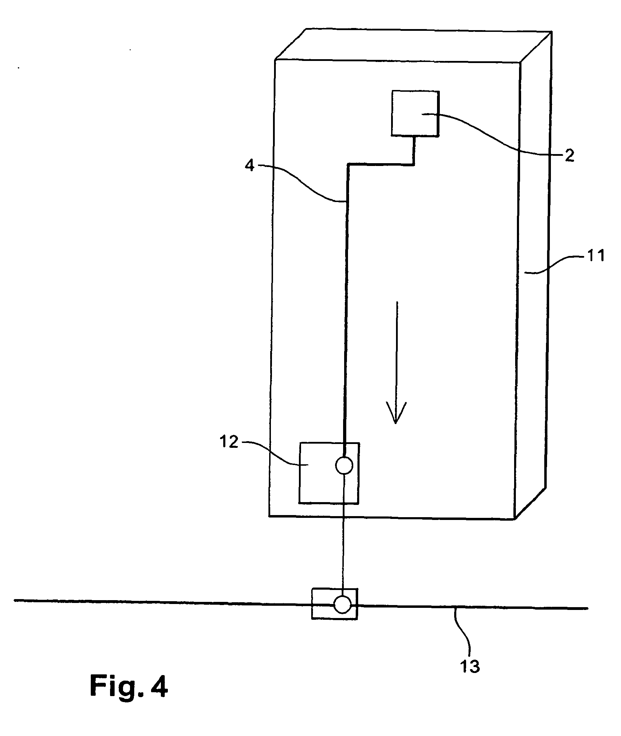

La figure 4 illustre un immeuble 11 équipé du boîtier 2. Le câble 4 relie le boîtier de raccordement 2 à un boîtier d'introduction 12 situé en bas de l'immeuble 11. Le boîtier d'introduction 12 permet de relier le câble 4 d'acheminement de fibres à un câble principal 13 situé en dehors de l'immeuble 11.

Le dispositif utilisé dans l'invention représente ainsi une solution économique au raccordement de fibres optiques chez un utilisateur, avec un temps d'intervention réduit. Il ne nécessite pas de personnel qualifié ni d'outillage particulier.

## Revendications

1. Procédé de raccordement de fibres optiques d'un utilisateur à un câble d'acheminement de fibres optiques, **caractérisé en ce qu'**il comprend les étapes suivantes :
a) enroulement d'un câble (4) d'acheminement de fibres optiques sur la surface extérieure d'une bobine (5),
- disposition d'une partie du câble (4) à l'intérieur de la bobine (5), grâce à une ouverture pratiquée dans la bobine (5),
- fixation du câble (4) sur l'intérieur de la bobine (5),
- disposition d'un boîtier de raccordement (2) apte à raccorder mécaniquement des fibres optiques d'un utilisateur à des fibres optiques disposées dans le boîtier (2) et issues du câble (4), à l'intérieur de la bobine (5) à l'aide d'un support (3) du boîtier (2),
- enfilement de l'extrémité extérieure du câble (4) à l'extérieur d'une boîte (6), l'enfilement se faisant via une ouverture (6a) de la boîte (6) dans des logements (6b), manière à fixer l'extrémité du câble (4) sur la boîte (6),
- rangement de la bobine (5) dans la boîte (6),
- fixation de la bobine (5) sur la boîte (6),
- fermeture de la boîte (6),
- formation d'une languette frangible (9) dans un couvercle de la boîte (6), de manière à recouvrir la partie du câble (4) qui est insérée dans les logements (6b),
b) - enlèvement de la languette (9) de la boîte (6), de manière à laisser apparaître la portion de câble (4) insérée dans les logements (6b),
- dégagement de l'extrémité du câble (4) de la boîte (6),
- positionnement de la boîte (6) sur un système de pose (10), de manière à bloquer la boîte (6),
- tirage du câble hors de l'ouverture (6a), de manière à débloquer la bobine (5) et à dérouler le câble (4) de la bobine (5),
- ouverture de la boîte (6) lorsque le câble (4) se bloque,
- sortie du boîtier de raccordement (2) de la bobine (5),
- déchirure de la bobine (5) afin de dégager le câble (4),
- raccordement du câble (4).

## Claims

1. A method for connecting optical fibers from a user to a cable for conveying optical fibers, **characterized in that** it comprises the following steps:
a)- winding a cable (4) for conveying optical fibers on the outer surface of a reel (5),
- positioning a portion of the cable (4) inside the reel (5), by means of an opening made in the reel (5),
- attaching the cable (4) on the inside of the reel (5),
- positioning a connection casing (2) capable of mechanically connecting optical fibers from a user to optical fibers positioned in the casing (2) and stemming from the cable (4), inside the reel (5) by means of a support (3) of the casing (2),
- slipping on the outer end of the cable (4) on the outside of a box (6), the slipping-on being accomplished via an opening (6a) of the box (6) in housings (6b) so as to attach the end of the cable (4) on the box (6),
- placing the reel (5) in the box (6),
- attaching the reel (5) on the box (6),
- closing the box (6),
- forming a frangible tab (9) in a lid of the box (6), so as to cover the portion of the cable (4), which is inserted into the housings (6b),
b)- removing the tab (9) from the box (6) so as to exhibit the cable (4) portion inserted in the housings (6b),
- releasing the end of the cable (4) from the box (6),
- positioning the box (6) on a laying system (10), so as to block the box (6),
- pulling the cable out of the opening (6a) so as to unblock the reel (5) and to unwind the cable (4) from the reel (5),
- opening the box (6) when the cable (4) is blocked,
- extracting the connection casing (2) from the reel (5),
- tearing the reel (5) in order to free the cable (4),
- connecting the cable (4).

## Patentansprüche

1. Verbindungsverfahren von optischen Fasern eines Benutzers mit einem Transportkabel optischer Fasern, **dadurch gekennzeichnet, dass** es die folgenden Schritte umfasst:
a) Aufrollen eines Transportkabels (4) optischer Fasern auf der Außenfläche einer Spule (5),
- Anordnen eines Abschnitts des Kabels (4) dank einer in die Spule (5) eingearbeiteten Öffnung im Innern der Spule (5),
- Befestigen des Kabels (4) im Innern der Spule (5),
- Anordnen eines Verbindungsgehäuses (2), das imstande ist, optische Fasern eines Benutzers mit in dem Gehäuse (2) angeordneten und vom Kabel (4) ausgehenden optischen Fasern in Innern der Spule (5) mit Hilfe eines Trägers (3) des Gehäuses (2) zu verbinden,
- Einfädeln des äußeren Endes des Kabels (4) außerhalb eines Kastens (6), wobei das Einfädeln über eine Öffnung (6a) des Kastens (6) in Aufnahmen (6b) derart erfolgt, dass das Ende des Kabels (4) auf dem Kasten (6) befestigt ist,
- Platzieren der Spule (5) in den Kasten (6),
- Befestigen der Spule (5) auf dem Kasten (6),
- Schließen des Kastens (6),
- Ausbilden einer zerbrechlichen Zunge (9) in einem Deckel des Kastens (6) derart, dass der Abschnitt des Kabels (4) bedeckt ist, der in die Aufnahmen (6b) eingeführt ist,
b) Entfernen der Zunge (9) des Kastens (6) derart, dass der in die Aufnahmen (6b) eingeführte Abschnitt des Kabels (4) sichtbar ist,
- Austreten des Endes des Kabels (4) aus dem Kasten (6),
- Positionieren des Kastens (6) auf einem Verlegesystem (10) derart, dass der Kasten (6) blockiert ist,
- Ziehen des Kabels aus der Öffnung (6a) derart, dass die Spule (5) gelöst und das Kabel (4) von der Spule (5) abgerollt wird,
- Öffnen des Kastens (6), wenn das Kabel (4) blockiert,
- Herausnehmen des Verbindungsgehäuses (2) aus der Spule (5),
- Aufreißen der Spule (5), um das Kabel (4) freizugeben,
- Verbinden des Kabels (4).
